Europäisches Patentamt

(19) European Patent Office

Office européen des brevets

(11) Publication number: **0 081 467**
**A1**

(12) **EUROPEAN PATENT APPLICATION**

(21) Application number: 82830198.6

(22) Date of filing: 07.07.82

(51) Int. Cl.³: **B 60 T 17/08**
**F 16 D 65/32**

(30) Priority: 26.11.81 IT 6853981

(43) Date of publication of application:
15.06.83 Bulletin 83/24

(84) Designated Contracting States:
AT BE CH DE FR GB IT LI LU NL SE

(71) Applicant: WABCO WESTINGHOUSE COMPAGNIA
FRENI S.p.A.
Via Pier Carlo Boggio 20
I-10138 Torino(IT)

(72) Inventor: Casalone, Enrico
Strada San Mauro 139
I-10156 Torino(IT)

(74) Representative: Jacobacci, Filippo et al,
c/o JACOBACCI-CASETTA & PERANI S.n.c. Via Alfieri, 17
I-10121 Torino(IT)

(54) Brake unit operated by fluid under pressure, particularly for the wheels of railway vehicles.

(57) A brake unit operated by fluid under pressure comprises a chamber (10) in which slides a piston (14) displaceable by fluid under pressure to operate, through an actuator, a push rod (32) carrying a brake shoe. The actuator is constituted by a cam member (52) angularly displaceable by the movement of the piston substantially about an axis perpendicular to the direction of displacement of the piston and of the push rod.

FIG. 1

EP 0 081 467 A1

"Brake unit operated by fluid under pressure, particularly for the wheels of railway vehicles".

The present invention relates to a brake unit operated by fluid under pressure, particularly for wheels of railway vehicles.

In particular, the invention concerns a brake unit of the type comprising a casing defining a cylinder in which slides a piston displaceable against the action of resilient return means by the effect of a fluid under pressure, a push rod projecting from the casing and displaceable axially in a direction substantially perpendicular to that of the displacement of the piston to operate a brake shoe arranged to cooperate with the peripheral surface of a wheel, and actuator means having opposing reaction surfaces and thrust surfaces which bear, by means of rolling contacts, against complementary reaction surfaces of the casing and complementary reaction surfaces of the rod respectively, the actuator means being operated by the piston to control the displacement of the rod out of the casing (braking stroke) against the action of resilient return means.

Brake units of this type are known, for example, from German patent application No. 1,680,381 and from French patent application No. 75 09743 and No. 79 22373.

In the brake units described and illustrated in the documents mentioned above, the actuator means for controlling the displacement of the push rod include a wedge-shaped element in the form of a fork which is fixed to the piston and is movable therewith. Each arm of the wedge-shaped element has a reaction surface cooperating with a reaction roller supported for rotation by the casing, and an inclined working surface cooperating with a working roller supported for rotation by the push rod.

The object of the present invention is to provide a brake unit of the type defined initially, which has a greater functional efficiency together with a smaller bulk, and which can also be manufactured in a simpler and more economical manner than conventional brake units.

According to the invention, this object is achieved by the fact that the actuator means for the brake unit include a cam member which is angularly displaceable by the movement of the piston substantially about an axis perpendicular to the directions of displacement of the piston and the push rod.

With this solution it is possible, by dimensioning the cam member and the relative thrust surfaces correctly, to achieve a higher amplification ratio of the force imparted by the piston to the push rod, considerably reducing the angle of application of this force relative to the axis of the push rod.

In order to increase this advantage even further, according to the invention the thrust surfaces of the cam member have an arcuate configuration. Preferably, these arcuate surfaces have initial slopes arranged to achieve a rapid initial displacement of the push rod during the braking stroke thereof.

According to a further characteristic of the invention, the reaction surfaces of the cam member and the complementary reaction surfaces of the casing have a rounded configuration, those of one being convex and of the other being concave, with the radius of curvature of the concave surfaces substantially greater than the convex surfaces.

Thus, the cam member is in direct, purely rolling contact with the casing, without the need to use rollers or other intermediate rolling members. This allows the number of components of the brake unit according to the invention to be reduced, considerably simplifying both the manufacture and the assembly and maintenance.

Further characteristics and advantages of the invention will become clear in the course of the detailed description which follows with reference to the appended drawings, provided purely by way of non-limiting example, in which:

Figure 1 is a schematic transverse sectional view of a brake unit according to the invention;

Figure 2 is a schematic view partially sectioned along the line II-II of Figure 1, and

Figure 3 is a perspective view of an internal part of the brake unit according to the invention.

Referring to the drawings, by 10 is shown a casing or body which has a substantially cylindrical general form and is intended to be fixed to a support structure of a railway vehicle, close to one of its wheels, not illustrated. In the description which follows, the terms upper and lower, vertical and horizontal, and the like are intended to refer to the mounted condition of the casing 10 on a railway vehicle, which corresponds to the position illustrated in the drawings. It is clear, however, that the unit may also be mounted in different positions.

The upper part of the casing 10 defines a cylinder 12 in which a piston 14 is sealingly slidable. The upper part of the cylinder 12, that is, the part between the piston 14 and the top of the casing 10, communicates with a passage 16 intended to be connected to a supply of fluid under pressure, for example, compressed air.

In the lower part of the cylinder 12 is housed a frusto-conical, helical, compression spring 20 the narrow end of which bears against the piston 14 and the larger end of which bears against an annular shoulder 22 located at the base of the cylinder 12.

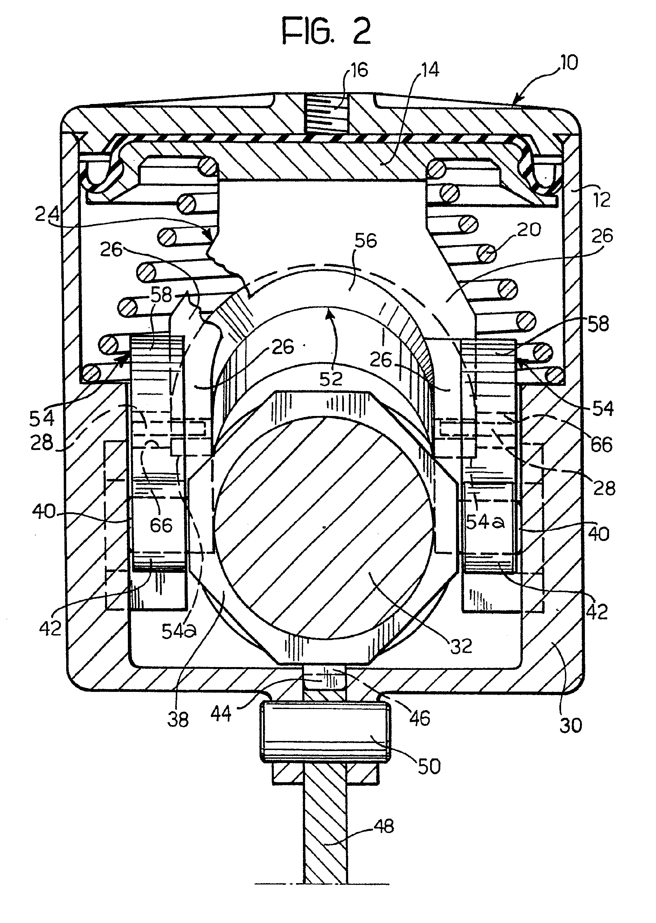

To the central zone of the lower face of the piston 14 is fixed a draw member, generally indicated 24, which, as seen in Figure 2, is generally fork-shaped. Indeed, this member 24 has, at its lower end, a pair of parallel spaced-apart arms 26 which extend parallel to the axis of the cylinder 12 and with each of which is associated a transverse pin 28 projecting laterally towards the exterior.

In the lower part of the casing 10, which is indicated by 30, is slidably mounted a push rod, generally indicated 32, the axis of which is directed perpendicular to that of the cylinder 12 and hence to the direction of displacement of the piston 14. The push rod 32, which may be provided with a unit for taking up play, not illustrated has an annular bearing collar 34 at one end and an attachment rod 36 at the other end, which projects laterally outwardly of the casing 10 and serves in a known manner for connection to a brake shoe or block, not shown in the drawings, arranged to cooperate with the peripheral surface of the wheel of the railway vehicle. The rod 36 may form part of the unit for taking up play in a manner known in itself.

That part of the push rod 32 within the casing 10 and a short distance from the attachment rod 36 is also provided with an annular collar 38 carrying laterally a pair of aligned pins 40 which are directed perpendicular to the axis of the rod 32 and each of which supports a respective cylindrical roller 42 for rotation. In addition, the collar 38 has underneath a projection 44 arranged to cooperate, in the manner described below, with a rounded tooth 46 formed at one end of an external lever 48 articulated at the base of the casing 10 about an articulation pin 50 parallel to the two pins 40.

By 52 is generally indicated a cam member connected to the draw member 24 and cooperating with the push rod 32.

The cam member 52 is generally fork-shaped, being disposed astride the part of the push rod 32 between the collars 34, 38, and including two sectors 54 which are disposed on opposite sides of the rod 32 and are interconnected by an arcuate yoke 56.

Each of the sectors 54 is formed from a vertically-disposed plate having a substantially triangular shape in which the base 58 and the vertex 60 opposite the base 58 are rounded and constitute a thrust surface and a reaction surface, respectively.

The reaction surface 60 of each sector 54 is convex and bears, with rolling contact, against a complementary reaction surface 62 of the casing 10 constituted by a recess having a larger radius of curvature than the reaction surface 60. This allows each sector 54, and hence the cam member 52, to move angularly substantially about an axis passing through the zone of contact between the reaction surfaces 60, 62. This axis is perpendicular to the axis of the piston 14 and that of the push rod 32, and intersects the latter during the rolling of the surfaces 60 relative to the surfaces 62.

The thrust surface 58 of each sector 54 is shaped generally in the form of an arc of a circle the centre of which is displaced behind and above the pivot axis of the cam member 52. Each thrust surface 58 is in contact with the lateral surface of a respective roller 42 which constitutes a complementary thrust surface.

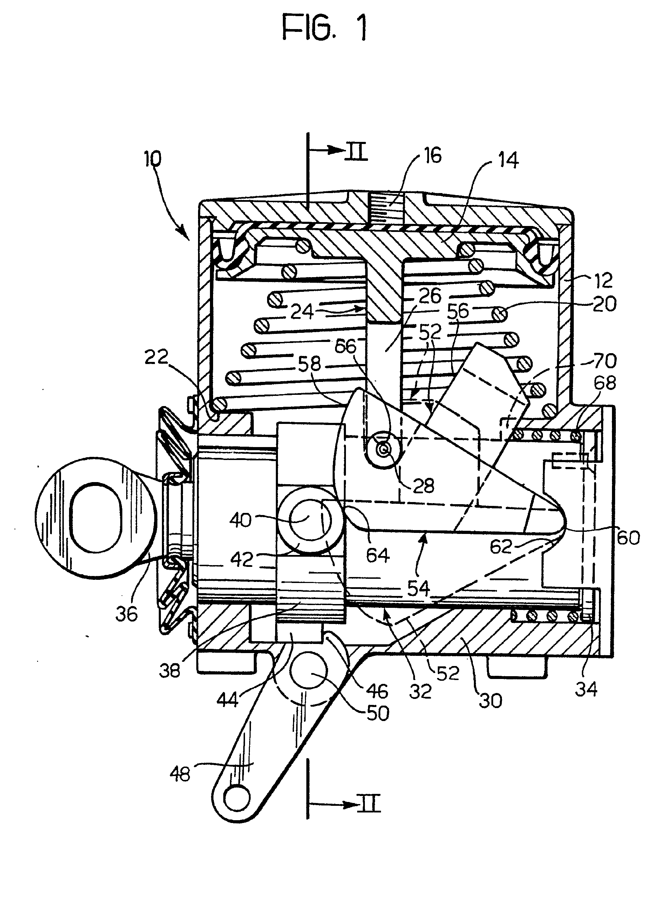

Moreover, as illustrated in detail in Figure 1, each reaction surface 58 may have an initial slope 64 the function of which, as will become clear, is to achieve a rapid initial displacement of the push rod during the approach movement thereof.

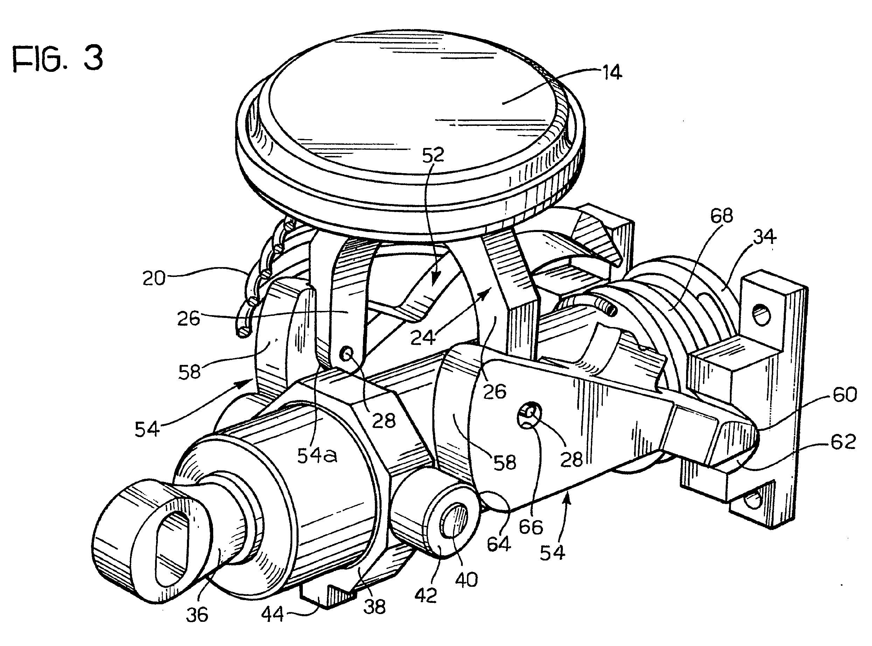

As is clearly seen in Figure 3, each of the arms 26 of the draw member 24 bears at its lower end on a corresponding lateral bearing part 54a of one of the two sectors 54 of the cam member 52.

The connection between the cam member 52 and the draw member 24 is effected by means of two lateral pins 28 each of which engages, with clearance, in a corresponding hole 66 formed in a respective sector 54 close to the central zone of the thrust surface 58.

This connection might be effected in a different manner, for example, resiliently by means of elements of elastomeric material.

A helical compression spring is shown by 58 and is wound coaxially around the end of the rod 32 opposite the attachment rod 36. One end of the spring 68 bears against the annular collar 34 and the other end against an annular bearing surface 70 of the casing 10.

The operation of the brake unit according to the invention will now be described.

In Figure 1, the rest condition of the unit, corresponding to the absence of pressure in the upper part of the cylinder 12, is shown by a continuous line. In this condition, the piston 14 and the cam member 52 are in a raised position, with the initial slopes 64 in contact with the lateral surfaces of the two rollers 42, and the push rod 32 with its attachment rod 36 in a withdrawn position.

The admittance of fluid under pressure to the upper part of the cylinder 12 through the passage 16, effects the braking stroke of the push rod 32, that is, the approach of the brake shoe or block carried by the attachment rod 36 to the peripheral surface of the wheel. In this case, indeed, the action of the fluid under pressure causes the downward displacement of the piston 14 and the draw member 24 and, through the arms 26 bearing on the lateral parts 54a, the consequent angular displacement of the cam member 52 towards the lowered position illustrated in broken outline in Figure 1. Due to this rotation, the push rod 32 is thrust axially towards the exterior, bringing the attachment rod 36 closer to the wheel. By virtue of the presence of the slopes 64, during the first stage of rotation of the cam member 52, an initial phase of rapid approach of the brake shoe to the wheel is achieved. The braking stroke subsequently proceeds in a progressive manner by virtue of the rolling contact between the reaction surfaces 58 of the sectors 54 and the lateral surfaces of the rollers 42, a gradual braking action thus being achieved.

A reduction in the pressure in the upper part of the cylinder 12, causes the return of the piston 14 and the cam member 52 towards the rest position, by virtue of the action of the spring 20 and the consequent return movement of the rod 32, and hence of the brake shoe due to the action of the helical spring 68.

The lever 48 may be used for manual braking or stopping of the wheel. To do this it suffices to rotate this lever 48 in an anti-clockwise direction with reference to Figure 1, thus causing the displacement of the push rod 32 and the consequent movement of the brake shoe towards the wheel, by virtue of the cooperation between the tooth 46 and the projection 44 of the collar 38.

From the above description, it is clear how the configuration of the brake unit according to the invention, and in particular the structure of the cam member 52, the configuration of the thrust surfaces 60, 62, and the position of the return spring 68, allow the unit to be rendered particularly compact with a small bulk, and simple to manufacture.

Naturally, while the principle of the invention remains the same, the details of construction and forms of embodiment may be varied from that described and illustrated, without departing from the scope of the present invention. Thus, for example, variations may be clearly foreseen both with regard to the geometrical profile of the thrust surfaces 58, so as to vary the degree of movement of the rod 32 and the value of the amplification ratio of the thrust force transmitted thereto, and with regard to the profile of the reaction surfaces 60, 62.

Furthermore, in order to avoid vibrations and undesiderable relative movements, each of the two sectors 54 of the cam member 52 could be resiliently connected to the casing 10, for example, by means of ties of elastomeric material or the like, which tend to press the reaction surface 60 against the respective complementary reaction surfaces 62.

CLAIMS:

1. Brake unit operated by fluid under pressure, particularly for railway vehicle wheels, comprising a casing defining a cylinder in which slides a piston displaceable against the action of resilient return means by the effect of a fluid under pressure, a push rod projecting from casing and displaceable axially in a direction substantially perpendicular to the displacement of the piston to operate a brake shoe arranged to cooperate with the peripheral surface of a wheel, and actuator means having opposing reaction surfaces and thrust surfaces which bear, by means of respective rolling contacts, against complementary reaction surface of the casing and against complementary thrust surfaces of the rod, the actuator means being operated by the piston to control the displacement of the rod towards the exterior of the casing (braking stroke) against the action of resilient return means, characterised in that the actuator means include a cam member (52) which is angularly displaceable by the movement of the piston (14) substantially about an axis perpendicular to the directions of displacement of the piston (14) and the push rod (32).

2. Unit according to Claim 1, characterised in that the thrust surfaces (58) of the cam member (52) have an arcuate configuration.

3. Unit according to Claim 2, characterised in that the arcuate thrust surfaces (58) of the cam member (52) have initial slopes (64) arranged to effect a rapid initial displacement of the push rod (32) during the

0081467

- 11 -

braking stroke thereof, the slopes (64) being followed by convex sections of constant curvature (58).

4. Unit according to Claim 1 or Claim 2, characterised in that the reaction surfaces (60) of the cam member (52) and the complementary reaction surfaces (62) of the casing (10) have a rounded configuration, those of one being convex and of the other being concave, with the radius of curvature of the concave surfaces (62) substantially greater than the convex surfaces (60).

5. Unit according to the preceding claims, characterised in that the cam member (52) is generally fork-shaped with two sectors (54) which are disposed on opposite sides of the push rod (32) and each having a substantially triangular form with a base (58) and a vertex (60) opposite the base (58) which are rounded and constitute respectively one of said thrust surfaces and one of said reaction surfaces of the cam member (52), and a yoke (56) which rigidly interconnects the two sectors (54).

6. Unit according to Claim 5, characterised in that a draw member (24) is fixed to the piston (14) and is articulated to both the sectors (54) close to the respective thrust surfaces (58).

7. Unit according to Claim 6, characterised in that the draw member (24) is generally fork-shaped with two shaped arms (26) extending on opposite sides with respect to the path of displacement of the push rod (32), the two arms (26) cooperating with two lateral bearing parts (54a) of the two sectors (54) of the cam member (52), and carrying two transverse pins (28) which are aligned with each other and serve for the articulated connection of the two sectors (54) of the cam member (52).

8. Unit according to the preceding claims, characterised in that the complementary thrust surfaces of the push rod (32) are defined, in a manner known in itself, by the lateral surfaces of a pair of opposing rollers (42) supported rotatably by the push rod (32), and in that the complementary reaction surfaces (62) are defined by a pair of adjacent recesses in the casing (10).

9. Unit according to any of the preceding claims, characterised in that the resilient return means for the push rod (32) comprise a helical compression spring (68) coaxial with the push rod (32) and interposed between two facing annular bearing surfaces (34, 70) of the push rod (32) and the casing (10) respectively, the two bearing surfaces (34, 70) being located, with respect to the cam member (52), on the opposite side from the thrust surfaces (58, 42).

10. Unit according to any one of the preceding claims, characterised in that it further includes auxiliary resilient means biasing the reaction surfaces (60) of the cam member (52) against the complementary reaction surfaces (62).

## FIG. 1

# FIG. 2

FIG. 3

0081467

# European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 730 959 (KNORR)<br><br>*The whole document*<br><br>--- | 1-3,5,<br>6,8 | B 60 T 17/08<br>F 16 D 65/32 |
| A | GB-A- 345 588 (HUESSY AND TRACHSEL)<br>*Page 2, lines 10-15 and the figure*<br><br>--- | 2 | |
| A | FR-A-2 197 756 (KHD)<br>*Page 3, line 37 to page 4, line 1 and the figures 1,2*<br><br>--- | 4 | |
| A | DE-A-1 052 659 (SIEMENS)<br>*Figures 1+3*<br><br>--- | 4 | |
| A | GB-A-1 061 296 (AMERICAN BRAKE SHOE COMPANY)<br>*Figure 3*<br><br>--- | 4 | TECHNICAL FIELDS SEARCHED (Int. Cl. ³)<br><br>B 60 T<br>F 16 D |
| A | FR-A-1 465 672 (WESTINGHOUSE FRANCE)<br>*Page 2, right-hand column, line 48 – page 3, left-hand column, line 5 and all figures*<br><br>--- | 2,5,6,<br>10 | |
| A | FR-A-2 376 339 (KNORR)<br>*The whole document*<br><br>---    -/- | 5-7 | |

The present search report has been drawn up for all claims

| Place of search<br>THE HAGUE | Date of completion of the search<br>03-03-1983 | Examiner<br>BLURTON M.D |
|---|---|---|

European Patent
Office

**EUROPEAN SEARCH REPORT**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| A | DE-A-1 942 776 (WESTINGHOUSE) *Page 4, line 25-27; figure* | 5,7 | | |
| A | DE-A-1 555 059 (WESTINGHOUSE FRANCE) *Page 7, lines 9-16 and the figures* | 2,3,10 | | |
| A | DE-B-1 185 075 (TODD) *Column 4, lines 48-52 and figure 7* | 7 | | |
| D,A | WO-A-8 000 605 (SAB) *The whole document* | 1,9,10 | | |
| | | | TECHNICAL FIELDS SEARCHED (Int. Cl. ³) | |
| | The present search report has been drawn up for all claims | | | |
| Place of search THE HAGUE | Date of completion of the search 03-03-1983 | | Examiner BLURTON M.D | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82